# EUROPEAN PATENT APPLICATION

(11) **EP 3 933 056 A1**
(43) Date of publication of application: **05.01.2022**
(21) Application number: 20182823.3
(22) Date of filing: 29.06.2020
(51) Int. Cl.: C22B 3/00

(54) **PROCESS FOR RECOVERING NOBLE METALS FROM A COLLOIDAL COMPOSITION**

(71) Applicant: Remonds PMR B.V., 4782 SE Moerdijk (NL)
(72) Inventor: van der Velden, Erik, 4761 ML Zevenbergen (NL); DOUGHERTY, John Michael, 44892 Bochum (DE)
(74) Representative: Pelster Behrends Patentanwälte PartG mbB

(57) **Abstract**

The invention relates to a process for recovering noble metals from a colloidal composition, comprising the steps: providing or producing a colloidal composition comprising one or more solvents, one or more stabilizers and nanoparticles of one or more noble metals, contacting the colloidal composition with one or more treating substance selected from the group consisting of organic amine compounds and non-noble metal salts, to produce an intermediate composition, agitating the intermediate composition for a time t1 to produce a treated composition, adjusting the pH of the treated composition to promote the precipitation of a solid precipitate comprising noble metal in elemental form, separating at least a portion of the solid precipitate from the liquid phase, and recovering noble metal in elemental form from the solid precipitate, wherein the organic amine compound is an aromatic N- or O-heterocyclic compound with two or more amine groups, wherein the aromatic ring is substituted with one amine group on each of the two carbon atoms directly adjacent to the heteroatom in the heterocyclic aromatic ring, and wherein the non-noble metal is selected from the list consisting of group 3 to 12 metals of the period 4, aluminium and tin.

## Description

The present invention relates to a process for recovering noble metals from a colloidal composition, the use of specific organic amine compounds and/or non-noble metal salts in respective processes and a kit of parts for use in the respective process. Also disclosed is a noble metal ingot produced by the process of the invention.

The subject-matter of the invention is defined in the claims.

Throughout the centuries, several metals that rarely occur in the earth's crust and/or are difficult to obtain from natural deposits in metallic form were used as currency, most notably gold and silver. Due to their oftentimes extraordinary and/or unique physical-chemical properties, e.g. with respect to conductivity or catalytic activity, several of these rare metals are nowadays crucial for the production of modern devices and important for many advanced technologies. Due to their low abundance, their importance as financial investment objects and their relevance for industrial applications, these metals are often times called precious metals. Today, the group of metals typically considered to be precious metals comprises gold, silver and the platinum group metals ruthenium, rhodium, palladium, osmium, iridium, and platinum. While this definition is widely used, the term "precious" is somewhat arbitrarily determined by the availability of known natural deposits, global demand as well as market value and therefore is not well-defined.

More suitable from the perspective of the skilled person is the term "noble metals" that in chemistry identifies metals that are resistant to corrosion and oxidation in moist air due to their position in the galvanic series, i.e. having a positive standard potential (i.e. at 25 °C, 101,3 kPa; pH=0, ion activity 1 mol/L) relative to a standard hydrogen electrode. Correspondingly, hereinafter the term "noble metal" is used, wherein the term comprises in particular gold, silver, copper, rhenium, ruthenium, rhodium, palladium, osmium, iridium and platinum.

In recent years, a growing awareness for the necessity of sustainable management of rare resources and for the protection of the environment encouraged the development of enhanced processes for the recycling of noble metals from a broad variety of waste materials from all industries, e.g. pharma, petro, automotive, electronics or healthcare. Furthermore, the increase in global demand and market value for some noble metals, in particular platinum and palladium, today allows for an economically viable recycling of these metals even from comparably difficult waste materials, e.g. from hazardous material and/or waste with low metal concentrations, that would not have been considered for noble metal recovery a few years ago.

Correspondingly, there is a demand in the technical field for improved processes for recovering noble metals from different waste materials that are economically and ecologically viable and allow for a cost-, time- and resource-efficient recovery of noble metals even from difficult waste materials.

Larger macroscopic parts of noble metal (i.e. in elemental form), like platinum wire or gold electrodes, can in some cases be efficiently recycled by mechanical separation from less valuable waste material. For several other compounds, e.g. noble metal based coatings or alloys, chemical processes are required for recovery that are typically based on dissolving the noble metal using strong acids, e.g. aqua regia, thereby producing a solution comprising dissolved ions of the noble metals. In consequence, the majority of prior art processes that address the recovery of noble metals relate to the recovery of noble metal ions from solutions, e.g. by means of chemical precipitation, electro-deposition, ion exchange, membrane separation or adsorption.

For example, basic precipitation-based methods for the recovery of noble metal ions from solutions are known for several decades and use different reactants either for the formation of insoluble complexes or for the reduction of the ions in solution (see e.g. G.-O. Müller, "Lehr- und Übungsbuch der anorganischenanalytischen Chemie, Band 3", 1992, chapter 9). However, new precipitation based methods for the recovery of ionic noble metals are still developed today, see e.g. D. Nagai et al., "a facile and high-recovery system for palladium(II) ion based on complexation between trithiocyanuric acid and melamine", Chem. Lett. 2016, 45, 1165-1167 or D. Nagai et al., "A facile, selective, high recovery system for precious metals based on complexation between melamine and cyanuric acid", RSC Adv., 2015, 5, 30133, wherein the respective process developed by D. Nagai is based on the complexation of palladium (II) ions in solution with melamine and subsequent precipitation by addition of trithiocyanuric acid or cyanuric acid respectively that associates with the melamine.

Other techniques are known in the art that employ polymers, see e.g. WO 03/027339 A1, or co-polymers, see e.g. EP 0340975 B1, for the recovery of noble metal ions from solution, wherein for example melamine-formaldehyde-thiourea resins are employed, see E. Birinci et al.; "Separation and recovery of palladium(II) from base metal ions by melamine-formaldehyde-thiourea (MFT) chelating resin", Hydrometallurgy 95 (2009) 15-21.

The prior art processes require that the solution comprises noble metal ions. However, this limitation it is not always desirable as the generation of noble metal ions from noble metals in most cases requires strong acids, e.g. aqua regia, that are often expensive, potentially hazardous and ecologically unfavourable. In particular, the requirement of noble metal dissolution is a drawback for the handling of colloidal compositions, e.g. colloidal suspensions, of elemental, i.e. non-ionic, nanoparticles of noble metals in a solvent that are typically stabilized by a chemical stabilizer, e.g. an anionic surfactant. From these compositions noble metals cannot be efficiently and directly recovered with the prior art processes without the intermediate generation of metal ions in solution.

However, due to the increasing relevance of nanotechnology for today's industries, several waste materials exist that comprise elemental noble metal nanoparticles. In several cases it is more convenient as well as more economically and ecologically viable to produce a colloidal suspension of elemental noble metal nanoparticles from these waste materials rather than generating a completely dissolved solution comprising noble metal ions.

Therefore, it would be highly desirable to obtain a process that is capable of directly recovering elemental noble metal from a colloidal composition comprising nanoparticles of noble metals. Unfortunately, the inventors are not aware of any process that would allow for the respective recovery in a sufficiently efficient manner.

In view of the above described problems, there was a long-felt need to overcome the respective disadvantages of the prior art processes and to provide a process for recovering noble metals from a colloidal composition comprising nanoparticles of these noble metals, that at least reduces the above-mentioned deficiencies of the prior art processes. In particular, it was an objective of the present invention to provide a process that has a high recovery-efficiency and is capable of recovering the majority of noble metal nanoparticles from the colloidal composition. Insofar, it was also an objective of the present invention that the process should be able to yield the noble metal in high purity.

Additionally, it was an objective of the present invention to provide a process that is robust and applicable to a broad variety of colloidal compositions. In particular, it was an objective of the present invention to provide a process that can be operated both at low or high pH values in order to match the chemical compatibility of other components in the colloidal composition. Insofar it was an additional objective of the present invention to provide a process that can be operated either with minimized gaseous emissions or with minimized waste generation, to match the capabilities of the available facilities and/or adapt to safety regulations.

Furthermore, it was an objective of the present invention to provide a process that employs comparably cheap reagents, is preferably water-based, does not require large amounts of electrical energy for prolonged heating or pressure control and is flexible with respect to the required equipment. In particular, it was an important objective to provide a process that can be operated in a particular safe way, thereby minimizing health risks and reducing exposure of dangerous substances to the environment.

Ideally, the process of the present invention should also be applicable to colloidal compositions comprising nanoparticles of noble metals that were generated from solutions comprising noble metal ions by reduction of the ions, thereby providing an efficient way of separating noble metals from other metal ions with a lower standard potential, thereby providing the skilled person with an additional tool and valuable alternative for separating noble metals from a solution comprising noble metal ions and less noble ions.

The above-mentioned objectives are achieved by processes according to the invention as defined in the claims.

In particular, the inventors surprisingly found that noble metals can be recovered from a colloidal composition comprising nanoparticles of these noble metals if the colloidal composition is contacted with one or more treating substances, that is a specific type of organic amine compound or a specific non-noble metal salt, before agitating the resulting composition for a time t1 and subsequently promoting precipitation of a solid precipitate by adjusting the pH of the resulting composition. The obtained solid precipitate can be separated from the remaining composition and the noble metal can be recovered from the solid precipitate in elemental form.

Without wishing to be bound by theory, the inventors assume, that the interaction between the nanoparticles of the noble metals and the stabilizer can be broken or at least weakened in the presence of a suitable treating substance that exhibits a stronger interaction with the stabilizer than the nanoparticles of the noble metals. The colloidal composition is thus no longer sufficiently stabilized and the nanoparticles are able to settle, although slowly and on long time scales. However, it is the promotion of precipitation by pH adjustment that significantly contributes to the high recovery efficiencies found for the process of the present invention. The inventors assume that the precipitation of either the complex or adduct of the stabilizer with the specific organic compound at low pH values, that is less soluble than both compounds individually, or the precipitation of non-noble metal-stabilizer complexes and/or the precipitation of non-noble metal hydroxides at high pH values that carries the no longer stabilized noble metal particles with it out of the liquid, similar to a co-precipitation, leading to very high recovery efficiencies, i.e. that almost all of the noble metal nanoparticles of the initial colloidal composition are captured in the solid precipitate. From the obtained solid precipitate, the noble metal can readily be recovered in elemental form by removal of organic compounds, e.g. by incineration, or inorganic compounds, e.g. by dissolution in acids.

Hereinafter, the subject-matter of the invention is discussed in more detail, wherein preferred embodiments of the invention are disclosed. Hereinafter, it is particularly preferred to combine two or more preferred embodiments to obtain an especially preferred embodiment. Correspondingly, especially preferred is a process according to the invention, that defines two or more features of preferred embodiments of the present invention.

The invention relates to a process for recovering noble metals from a colloidal composition, comprising the steps:
a) providing or producing a colloidal composition comprising one or more solvents, one or more stabilizers and nanoparticles of one or more noble metals,
b) contacting the colloidal composition with one or more treating substance selected from the group consisting of organic amine compounds and non-noble metal salts, to produce an intermediate composition,
c) agitating the intermediate composition for a time t1 to produce a treated composition,
d) adjusting the pH of the treated composition to promote the precipitation of a solid precipitate comprising noble metal in elemental form,
e) separating at least a portion of the solid precipitate from the liquid phase, and
f) recovering noble metal in elemental form from the solid precipitate,
wherein the organic amine compound is an aromatic N- or O-heterocyclic compound with two or more amine groups, wherein the aromatic ring is substituted with one amine group on each of the two carbon atoms directly adjacent to the heteroatom in the heterocyclic aromatic ring, and wherein the non-noble metal is selected from the list consisting of group 3 to 12 metals of period 4, aluminium and tin.

As set out above, within the framework of the present invention the term noble metal identifies metals that have a positive standard potential when measured relative to a standard hydrogen electrode at 25 °C, 101.3 kPa, pH of 0 and an ion activity 1 mol/L. The underlying requirement is that the noble metal nanoparticles can exist in at least a slightly acidic colloidal composition without getting dissolved, thereby forming metal ions. Insofar, it is observed that those metals that have only slightly positive standard potentials (e.g. copper) or are liquid at room temperature (i.e. mercury) are oftentimes difficult to handle in colloidal compositions that are used for the process of the present invention. With respect to the standard potential, it appears that values above +0.7 V ensure a convenient handling of the noble metal nanoparticles in most colloidal compositions of the present invention.

In practice, the properties of the noble metals that determine the underlying aspect of being able of obtaining a colloidal solution of the respective nanoparticles, are very similar for the different noble metals. In fact, this aspect is in most cases predominantly influenced by the particle size of the nanoparticles rather than their chemical nature. Likewise, the promotion of precipitation is conducted by interaction of the treating substance with other components in the colloidal composition that is mostly independent of the properties of the noble metal. Therefore, the inventive concept is applicable to a wide variety of noble metals without modifications. For example, the inventors have comprehensive experience with palladium and gold containing colloidal composition that can be used in processes of the present invention and show a comparable behaviour in colloidal compositions. As a secondary aspect, it is of course beneficial to employ the process for those noble metals, that are especially valuable. A high value of the obtainable product makes it easier to run the process of the invention in an economically viable way. While the process of the present invention is comparably cheap compared to some processes for noble metal recovery from noble metal ions, it might not be viable in all cases to use it for the recovery of cheaper noble metals like e.g. copper.

Correspondingly, a process according to the invention is preferred, wherein the one or more noble metals are selected from the group consisting of rhodium, platinum, gold, palladium, iridium, osmium, ruthenium and silver, preferably selected from the group consisting of platinum, gold, palladium and silver, and most preferably are palladium and/or gold, wherein palladium is especially preferred,
and/or
wherein the one or more noble metals have a positive standard potential of at least 0.7 V, measured relative to a standard hydrogen electrode at 25 °C, 101.3 kPa, pH of 0 and an ion activity 1 mol/L.

Within the framework of the present invention, the term nanoparticle means that the particles have a diameter in the range from 1 nm to 1000 nm. While it is self-explanatory for the skilled person, it is important for the understanding of the invention to highlight that nanoparticles of noble metal comprise noble metal in elemental form, e.g. Ag°, Au° or Pd°, and are not noble metal ions.

In most cases, the nanoparticles of one or more noble metals will exhibit a size distribution, that can for example be expressed by the well-known D50 value, that indicates the diameter for that half of the sample by volume has a smaller diameter. The inventors found before, that smaller nanoparticles are easier to stabilize in colloidal compositions and are overall better to handle in processes of the present invention, e.g. when preceding filtration steps are needed for removing macroscopic particles suspended in the colloidal composition.

Correspondingly, a process according to the invention is preferred, wherein the noble metal nanoparticles have a D50 value in the range of 1 to 200 nm, preferably in the range of 1.5 to 100 nm, more preferably in the range of 2 to 50 nm, most preferably in the range of 2.5 to 10 nm.

In the framework of the present invention, a colloidal composition is a heterogeneous mixture between noble metal nanoparticles and at least one solvent, wherein the mixture has a continuous phase and a dispersed phase of nanoparticles that does not settle or would take a very long time to settle appreciably. In the technical field of colloid chemistry, the terms colloidal solution (in particular for smaller nanoparticles) and colloidal suspension (in particular for larger nanoparticles) are sometimes used. However, a colloidal composition can in most cases be regarded as an intermediate between a true solution and a true suspension. In order to avoid any unnecessary ambiguity that could arise from this artificial distinction, the term "colloidal composition" is used in the framework of the present invention that encompasses mixtures with nanoparticle of all sizes.

In practice, the nanoparticles of the noble metals are often stabilized in the colloidal composition by stabilizers in order to prevent settling of the nanoparticles.

Correspondingly, a process according to the invention is preferred, wherein in the colloidal composition the nanoparticles of one or more noble metals are dispersed or suspended in the one or more solvents and stabilized by the one or more stabilizers.

The invention is not limited with respect to the solvent or the stabilizer that can be used. The skilled person is well aware of suitable solvents and stabilizers that are oftentimes commercially available. The skilled person chooses a suitable stabilizer for the nanoparticles of noble metal that he intends to stabilize based on his general knowledge and tabled data that is available in respective databases. It is expedient to choose a solvent that is suitable for dissolving the stabilizer while not dissolving the noble metal, thereby excluding e.g. aqua regia or other strong acids in high concentrations. The skilled person chooses a suitable solvent for the stabilizers based on his general knowledge and tabled data that is available in respective databases, or refers to the recommendations typically provided by the producer of the stabilizers.

The skilled person is aware that stabilization of nanoparticles in colloidal compositions can be obtained by electric double layer formation, wherein colloidal particles gain negative electric charge when negatively charged ions of the dispersion medium are adsorbed on the particles surface and wherein a negatively charged particle attracts the positive counterions surrounding the particle. This so called electrostatic stabilization is based on the repulsion of like electrical charges in the surrounding layers of two nanoparticles. In this scenario, the mass of the nanoparticles is so low that its kinetic energy is too weak to overcome the electrostatic repulsion between charged layers so that agglomeration and settling is prevented.

Based on this knowledge, the skilled person chooses substances as stabilizer that form anions in solution, preferably soft, i.e. larger ions with a low total charge, that can be adsorbed at the surface of the nanoparticles, like e.g. anionic surfactants.

In view of the above, a process according to the invention is preferred, wherein the one or more stabilizers are anionic surfactants, preferably selected from the group consisting of substituted or unsubstituted organo sulfates, organo sulfonates, organo phosphates and organo carboxylates, more preferably substituted organo sulfonates, most preferably mercapto propane sulfonate. From these stabilizers, mercapto propane sulfonate is especially preferred for cases in that the noble metal is palladium or gold.

While the amount of stabilizer should be sufficient to stabilize the colloidal composition, it is important from an economic and ecologic point of view to limit its concentration in the colloidal composition. The inventors found that processes of the invention are preferred, wherein the combined concentration of the one or more stabilizers in the colloidal composition is in the range of 0.5 to 100 g/kg, preferably 2 to 60 g/kg, more preferably 10 to 30 g/kg, with respect to the weight of the colloidal composition.

Knowing that the stabilizer typically is a compound that forms anions in solution, the skilled person is well aware that such compounds will usually be dissolved in polar solvents, wherein those solvents are preferred that are readily available and typically cheap. Therefore, a process according to the invention is preferred, wherein the one or more solvents are selected from the list consisting of protic and aprotic polar solvents, preferably selected from the list consisting of water, ethyl acetate, methyl acetate, tetrahydrofuran, acetone, dimethylformamide, acetonitrile, dimethyl sulfoxide, dichloromethane, methanol, ethanol, propanol, butanol and saturated organic acids with 1 to 6 carbon atoms, more preferably selected from the list consisting of water, dimethyl sulfoxide and dichloromethane, wherein the colloidal composition most preferably comprises water.

The usage of water as the predominant solvent, i.e. more than 50 % by weight with respect to the weight of the solvent, is especially preferred, wherein the option of being able to use water as a solvent is an important benefit of the process of the present invention, as water is not only cheap and readily available but its usage also reduces the amount of organic wastes that are produced in preferred processes.

Operating the process of the present invention can become more difficult if the concentration of the nanoparticles in the colloidal composition is too high, as successful stabilization of the colloidal composition can be challenging in these cases, potentially requiring very large amounts of stabilizer. Likewise, while the process of the present invention is capable of removing even minor amounts of nanoparticles from a colloidal solution, down to concentrations of a few ppm by weight, it is often not expedient from an economic and ecologic perspective to run the process of the present invention for colloidal compositions with very low concentrations of nanoparticles.

Based on this, a process according to the invention is preferred, wherein the concentration of the noble metal nanoparticles in the colloidal composition is in the range of 0.05 to 40 g/kg, preferably in the range of 0.1 to 20 g/kg, more preferably in the range of 0.5 to 10 g/kg, most more preferably in the range of 1 to 2 g/kg, with respect to the weight of the colloidal composition.

It was highlighted before that the process of the present invention is directing at recovering noble metals from a colloidal composition that comprises the nanoparticles in elemental form, that is sometimes called metallic form. The presence of ions of noble metals is not required. In fact, the presence of noble metal ions can even be unfavourable as these ions are known to interact with the anions of typical stabilizers, thereby potentially increasing the amount of stabilizer required to obtain a stable colloidal solution. Furthermore, in particular if non-noble metal salts are used as treating substance, noble metal ions can end up in the solid precipitate that comprises the noble metal in elemental form. In many separation processes, the noble metal ions can end up in the waste material that is separated from the elemental noble metal, thereby potentially wasting precious noble metal.

Therefore, a process according to the invention is preferred, wherein the colloidal composition comprises less than 10 ppm, preferably less than 5 ppm by weight, of ions of the one or more noble metals with respect to the weight of the colloidal composition.

In step a) of the process of the present invention the colloidal composition is for example provided, e.g. as received from an external facility that directly produces the colloidal composition as waste material or generates it by processing of other waste material. As an alternative, the colloidal composition can be produced, wherein mixing of the individual compounds is the most basic way of producing a colloidal composition.

It is a particular benefit of the process of the present invention, that the colloidal composition can be prepared from a solution comprising noble metal ions by reducing the noble metal ions to the elemental metal, i.e. in-situ, thereby producing nanoparticles of these noble metals that can be recovered with the process of the present invention. This provides the skilled person with a valuable additional option for treating solutions comprising noble metal ions among other compounds, as it is can be possible to selectively reduce the noble metal ions and selectively recover them in a very efficient way with the process of the present invention.

The colloidal composition is contacted with the one or more treating substances, wherein the most basic form of contacting is the addition of the treating substance to the colloidal composition.

The specific treating substances chosen in the process of the present invention serve a synergistic purpose with respect to three different aspects. These treating substances are on the one hand designed to interact with the nanoparticle-stabilizer complex and at the same time need to undergo precipitation, or at least contribute to precipitation, upon pH adjustment in order to carry the nanoparticle of the noble metals with them out of the colloidal composition into the solid precipitate, from that the noble metal can be recovered in elemental form. Furthermore, it was a requirement for the treating substance that the precipitate should be separable from the noble metal in a fast and convenient way.

The inventors found that two types of treating substance can serve this purpose, namely specific organic amine compounds and specific non-noble metal salts.

The specific organic amine compounds are aromatic N- or O-heterocyclic compounds with two or more amine groups, wherein the aromatic ring is substituted with one amine group on each of the two carbon atoms directly adjacent to the heteroatom in the heterocyclic aromatic ring: In other words, these compound have at least one oxygen or nitrogen within an aromatic ring that can work as a hydrogen bond acceptor, wherein the compound has a amine group in the vicinity on each side of the heteroatom that lies in the same plane due to the aromatic ring. These two amine groups can serve as hydrogen bond donors. With this specific set up, the organic amine compound can effectively interact with the functional group of the stabilizer, e.g. an organo sulfonate or organo sulfate. When the pH value is decrease, a portion of the stabilizer is protonated resulting in a particular strong interaction between hydrogen bond donors (e.g. S-O-H in a sulfonate and N-H in the amine compound) and hydrogen bond acceptors (e.g. S=O in a sulfonate and the aromatic heteroatom in the amine compound). The inventors deducted, that the organic amine compound should have at least one N-C-N/O-C-N connectivity in the molecule. This structure is for example available for 2,6-diamino compounds of 6-membered aromatic N- or O-heterocyclic rings or 2,5-diamino compounds of 5-membered aromatic N- or O-heterocyclic rings.

In view of the above, a process according to the invention is preferred, wherein the organic amine compound is selected from the list consisting of 2,4,6-Triamino-s-triazine, 1,3,5-Triazine-2,6-diamine, 4-Alkyl-1,3,5-triazine-2,6-diyldiamine, 2,6-Pyridindiamine, 2,6-Pyrimidindiamine, 2,6-Pyrazindiamine, 2,5-Furandiamine, 2,5-Pyrroldiamine, 2,5-Imidazoldiamine, 1,3-Oxazol-2,5-diamine preferably selected from the list consisting of 2,4,6-Triamino-s-triazine, 2,6-Diamino-s-triazine and 4-Alkyl-1,3,5-triazine-2,6-diyldiamine, more preferably 2,4,6-Triamino-s-triazine, that is also called melamine.

The usage of polymeric organic amine compounds was considered by the inventors but was not identified to be particular beneficial, making the usage of monomeric or dimeric compounds more preferably, as these are typically cheaper. Therefore, a process according to the invention is preferred, wherein the organic amine compounds are monomeric or dimeric compounds.

In screening experiments, the inventors identified suitable ranges for the amount of organic amine compound that needs to be added to the colloidal composition in order to obtain good results. Preferred is a process according to the invention, wherein the total amount of organic amine compound added to the colloidal composition in step b) is in the range of 0.3 to 60 g/kg, preferably 1.5 to 40 g/kg, more preferably 6 to 20 g/kg, with respect to the weight of the colloidal composition, and most preferably is in the range of 50 to 70 % of the total amount of the one or more stabilizers in the colloidal composition if the organic amine compound 2,4,6-triamino compound, preferably 2,4,6-Triamino-s-triazine.

Within the framework of the present invention, non-noble metal salts are salts of metals that are not noble metals, i.e. have a negative standard potential when measured relative to a standard hydrogen electrode at 25 °C, 101.3 kPa, pH of 0 and an ion activity 1 mol/L.

With respect to the non-noble metal salt, it was found expedient to choose the anion of the salt in order to ensure a high solubility. Thus, a process according to the invention is preferred, wherein the non-noble metal salts are selected form the list consisting of metal halides, metal nitrates and metal sulfates, preferably selected form the list consisting of metal bromides and/or metal chlorides, more preferably selected form the list consisting of metal chlorides.

With respect to the non-noble metal ion in the salt the inventors conceived that the metal ion should have a high charge density. Such metal ions are typically considered "hard" according to the concept of "hard and soft acids and bases" that is also known as the Pearson acid-base concept. Therefore, these metal ions show strong interactions with the comparably soft, i.e. low charge density, anions of the stabilizer. Therefore, according to the invention the non-noble metal is selected from the list consisting of group 3 to 12 metals of period 4, aluminium and tin. Thereby, the indicator "group" and "period" refer to the periodic table of elements that is well-known to the skilled person. The group 3 to 12 metals of period 4 are transition metals of the first row that are comparably small, typically attributed to the population of 3d orbitals, but form cations with high charges, i.e. typically +2 to +4 or even higher. The same argument holds true for the small aluminium that typically forms +3 cations. While tin is in principle larger due to being a period 5 element, the +4 charge of Sn cations balances this with respect to the charge density, resulting in a suitability as cation for the non-noble metal ion.

These elements tend to form hydroxides with low or very low solubility in water and most other solvents, making them ideal for their synergistic purpose in the process of present invention. Ideal non-noble metal salts can be identified based on the parameters of high charge density, low solubility of the hydroxide, availability, price and overall safety with respect to health and environment. Taking these factors into account, a process according to the invention is preferred, wherein the non-noble metal salt is selected from the list consisting of iron salts, cobalt salts, nickel salts, chromium salts, tin salts, titanium salts and aluminium salts, preferably selected from the group consisting of tin salts, titanium salts, iron salts and aluminium salts, more preferably selected from the group consisting of iron salts and aluminium salts, wherein the latter two excel in all of the categories with iron salts being even more preferred as they are typically very cheap. For a given non-noble metal, a high oxidation number is preferred if the non-noble metal forms salts with different oxidation states, e.g. Fe³⁺ is preferred over Fe²⁺. Overall, due to being very hard, non-noble metal salts are preferred in that the metal ion has an oxidation number of 3 or more.

In screening experiments, the inventors identified suitable ranges for the amount of non-noble metal salt that needs to be added to the colloidal composition in order to obtain good results. Preferred is a process according to the invention, wherein the total amount of non-noble metal salt added to the colloidal composition in step b) is in the range of 1 to 100 g/kg, preferably 20 to 80 g/kg, more preferably 40 to 60 g/kg, with respect to the weight of the colloidal composition, wherein the non-noble metal salts are preferably added to the colloidal composition as an aqueous solution comprising the non-noble metal salts.

In step c) of the process according to the invention the intermediate composition, i.e. the colloidal composition that was contacted with the treating substance, is agitated for a time t1 to produce a treated composition. The best results were typically obtained on a mixing plate or by stirring with a stirrer. Preferred is a process according to the invention, wherein the agitating in step c) is conducted by swirling the intermediate composition on a mixing table or by stirring with a stirrer.

While the process of the present invention is suitable for noble metal recovery even at short times t1, the inventors found that it is beneficial to agitate the intermediate composition for at least a few minutes. Without wishing to be bound by theory, it is assumed that the interaction between the treating substance and the nanoparticle-stabilizer complex is not instantaneous, but requires some reaction time. While it appears possible to conduct the process of the invention several times over and over again for the same colloidal composition with short t1, it is more efficient to simply prolong t1 in order to increase the recovery efficiency of a single process of the invention. The inventors found that the process according to the invention is preferably conducted with an intermediate composition in step c) that is at least slightly acidic. Without wishing to be bound by theory, it is assumed that under this conditions a fraction of the stabilizer ions is protonated within the chemical equilibrium of the protonation reaction, wherein it is suspected that the protonated fraction of the stabilizer anions has a lower interaction strength with the noble metal nanoparticles, thereby facilitating the interaction with the added treating substance.

Therefore, a process according to the invention is preferred, wherein the time t1 is in the range of 10 to 240 min, preferably in the range of 20 to 120 min, more preferably in the range of 30 to 60 min, most preferably at least 30 min,
and/or
wherein the pH of the intermediate composition is below 7.

In step d) of the process of the present invention the pH of the treated composition is adjusted to promote the precipitation of a solid precipitate, wherein the treating substance preferably contributes to the precipitation, e.g. if the precipitate comprises an adduct or complex of the organic amine compound or a salt comprising the non-noble metal ion of the non-noble metal salt. Without wishing to be bound by theory, it is assumed that this precipitation carries the noble metal nanoparticles with it out of the colloidal composition in a form of co-precipitation. In the process of the present invention it is defined that the precipitation is promoted by the pH adjustment, as it can occur that minor amounts of the precipitate slowly settle over time. Insofar, it is preferred that at least 20 %, preferably at least 40 %, more preferably at least 60 %, most preferably at least 80 %, of the precipitate by weight precipitated after adjustment of the pH value in step d).

The pH dependent precipitation behaviour is influenced by the other components in the treated composition as well as the type of treating substance. For example, it is possible that the non-noble metal precipitates as a salt together with another anion in the composition at low pH values. However, the main mechanism for precipitation in the process of the present invention typically is the precipitation of a complex of the organic amine compound at low pH values or the precipitation of non-noble metal hydroxides from the treated composition at high pH values. Therefore, a process according to the invention is preferred, wherein the pH of the treated composition in step d) is adjusted to a pH in the range of 0 to 4, preferably in the range of 0.5 to 2, if an organic amine compound was used as a treating substance in step b), wherein the pH of the treated composition is preferably adjusted by addition of an inorganic acid, preferably hydrochloric acid or hydrobromic acid, more preferably hydrochloric acid,
or
wherein the pH of the treated composition in step d) is adjusted to a pH in the range of 7 to 14, preferably in the range of 7.2 to 12, if a non-noble metal salt was used as a treating substance in step b), wherein the pH of the treated composition is preferably adjusted by addition of an inorganic base, preferably a metal hydroxide, preferably selected from the group consisting of sodium hydroxide, potassium hydroxide, lithium hydroxide, magnesium hydroxide and calcium hydroxide, most preferably calcium hydroxide.

It is possible in the process of the invention to use a combination of organic amine compounds and non-noble metal salts as treating substance, wherein both treating substances interact with the nanoparticle-stabilizer complex during agitation. In this case however, the precipitation occurs either only at high or low pH values or sequentially in a stepped process of two separate precipitations at two different pH values, wherein the precipitate of the first precipitation is preferably removed before the second precipitation is promoted by a second pH adjustment.

Suitable means for the separation of the solid precipitate in step e) are for example filtration, centrifugation and decantation. The inventors found that the recovery efficiency of the process according to the invention can further be increased, if the precipitation or settling of the nanoparticles is promoted by a cooling step, preferably a prolonged cooling step. In principle, it is possible to cool the treated composition before the separation step and/or to cool the separated liquid phase to induce the formation of further precipitate that can be separated in a subsequent additional separation step. Thus, a process according to the invention is preferred, wherein the separation in step e) is conducted by filtration, centrifugation or decantation, preferably by filtration, wherein most preferably the separation comprises a step of cooling the treated composition before separation to temperatures below 8 °C, preferably below 4 °C, for at least 24 hours, preferably at least 48 hours and/or a step of cooling the separated liquid phase to temperatures below 8 °C, preferably below 4 °C, for at least 24 hours, preferably at least 48 hours.

The choice of the optimal method for the recovery of noble metal in elemental form from the solid precipitate in step f) is influenced by the type of treating substance that was used in the process of the present invention and by the chemical composition of the solid precipitate.

If organic amine compounds are used as the treating substance, the solid precipitate will typically comprise significant amounts of organic compounds that can conveniently be removed by incineration, wherein preferably a drying step is included for the precipitate before the incineration in order to limit emissions caused by residual solvents in the wet precipitate. This approach is very convenient and allows obtaining the noble metal in high purities in a safe and reliable way. In this approach, the generation of solid waste is minimized as the majority of non-noble metal compounds in the precipitate are removed as gaseous incineration products.

When non-noble metal salts are used as treating substance, the precipitate can typically be at least partially dissolved in acids, that dissolve e.g. the hydroxide, while leaving the noble metal unaffected. Herein it can be preferred to dry and/or glow the precipitate before the separation step, e.g. to decompose organic compounds and/or to convert hydroxides into carbonates that might have a better solubility in weak acids.

In summary, a process according to the invention is preferred, wherein the recovery in step f) comprises heating the separated solid precipitate at a temperature of more than 400 °C, preferably of more than 500 °C, more preferably of more than 600 °C for a time t2 to evaporate and/or incinerate residual organic compounds in the solid precipitate, if an organic amine compound was used as a treating substance in step b), wherein t2 preferably is in the range of 1 to 4 hours, more preferably in the range of 2 to 3 hours,
or
wherein the recovery in step f) comprises dissolving at least a portion of the non-noble metals in the separated solid precipitate in an inorganic acid, preferably hydrochloric acid and/or hydrobromic acid and/or nitric acid, more preferably hydrochloric acid and/or nitric acid, if a non-noble metal salt was used as a treating substance in step b).

By adjustment of the process parameters of the process of the present invention, in particular the time t1 and the magnitude of pH adjustment, the skilled person can optimize the recovery efficiency of the process according to the invention. From an economic and ecologic perspective, it is beneficial to optimize the process of the present invention for high recovery efficiencies, in particular if the process parameters shall be used for several runs of the same type of colloidal composition. Accordingly, a process according to the invention is preferred, wherein the solid precipitate separated in step e) comprises at least 90 %, preferably at least 95 %, more preferably at least 98 %, by weight of the noble metal contained in the colloidal composition produced or provided in step a).

The process of the present invention overcomes the disadvantages of the prior art processes that are directed at the recovery of noble metal from solutions comprising noble metal ions. Beneficially, a process for recovering noble metals from a colloidal composition comprising nanoparticles of these noble metals is provided. In particular, the process of the present invention is able to obtain a high recovery-efficiency and is capable of recovering very high fractions of the noble metal nanoparticles comprised in the colloidal composition, wherein the process yields noble metal in high purity.

Advantageously, the process of the present invention is very robust and applicable to a broad variety of colloidal compositions. Thereby, the process of the present invention can be operated with respect to the precipitation both at low or high pH values in order to match the chemical compatibility of other components in the colloidal composition. Furthermore, based on the choice of the operator, the process can be operated either with minimized gaseous emissions, e.g. by using non-noble metal salts as treating substance, or with minimized solid waste generation, e.g. by using organic amine compounds as treating substance, to match the capabilities of the available facilities and/or adapt to safety regulations.

Furthermore, the process according to the invention can employ comparably cheap reagents, like iron chloride and calcium hydroxide and can be operated as water-based process. As no heating or pressure control is required, the process of the present invention does not require large amounts of electrical energy and is highly flexible with respect to the required equipment. Likewise, the process of the present invention can be operated in a particular safe way, thereby minimizing health risks and reducing exposure of dangerous substances to the environment.

It is particular beneficial, that the process of the present invention is applicable to colloidal compositions comprising nanoparticles of noble metals that were generated from solutions comprising noble metal ions by reduction of the ions, thereby providing an efficient way of separating noble metals from other metal ions with a lower standard potential and providing the skilled person with an additional alternative for separating noble metals from a solution comprising noble metal ions.

Some industries generate waste material that makes the usage of either organic amine compounds or non-noble metal salts as treating substance unpractical. Therefore, the skilled person understands that the invention also relates to two separate processes as disclosed hereinafter. Preferred embodiments of these processes correspond to preferred embodiments disclosed herein for the process of the present invention.

Disclosed is a process for recovering noble metals from a colloidal composition, comprising the steps:
a1) providing or producing a colloidal composition comprising one or more solvents, one or more stabilizers and nanoparticles of one or more noble metals,
b1) contacting the colloidal composition with one or more treating substance selected from the group consisting of organic amine compounds to produce an intermediate composition,
c1) agitating the intermediate composition for a time t1 to produce a treated composition,
d1) adjusting the pH of the treated composition to promote the precipitation of a solid precipitate comprising noble metal in elemental form,
e1) separating at least a portion of the solid precipitate from the liquid phase, and
f1) recovering noble metal in elemental form from the solid precipitate,
wherein the organic amine compound is an aromatic N- or O-heterocyclic compound with two or more amine groups, wherein the aromatic ring is substituted with one amine group on each of the two carbon atoms directly adjacent to the heteroatom in the heterocyclic aromatic ring.

Furthermore, disclosed is a process for recovering noble metals from a colloidal composition, comprising the steps:
a2) providing or producing a colloidal composition comprising one or more solvents, one or more stabilizers and nanoparticles of one or more noble metals,
b2) contacting the colloidal composition with one or more treating substance selected from the group consisting of non-noble metal salts, to produce an intermediate composition,
c2) agitating the intermediate composition for a time t1 to produce a treated composition,
d2) adjusting the pH of the treated composition to promote the precipitation of a solid precipitate comprising noble metal in elemental form,
e2) separating at least a portion of the solid precipitate from the liquid phase, and
f2) recovering noble metal in elemental form from the solid precipitate,
wherein the non-noble metal is selected from the list consisting of group 3 to 12 metals of period 4, aluminium and tin.

The inventors optimized the process of the present invention for obtaining the best performance and the best economic return and arrived at an especially preferred process for recovering noble metals from a colloidal composition, comprising the steps:
a3) providing a colloidal composition comprising water, mercapto propane sulfonate as a stabilizer, and nanoparticles of gold and/or palladium,
b3) contacting the colloidal composition with one or more treating substance selected from the group consisting of melamine and iron (III) chloride to produce an intermediate composition,
c3) agitating the intermediate composition for a time t1 to produce a treated composition,
d3) adjusting the pH of the treated composition to promote the precipitation of a solid precipitate comprising gold and/or palladium in elemental form,
e3) separating at least a portion of the solid precipitate from the liquid phase, and
f3) recovering gold and/or palladium in elemental form from the solid precipitate.

It can be preferable to melt the noble metal that is recovered as a result of the process of the invention in order to produce ingots of the noble metal. This is not only beneficial as ingots are easy to store and convenient to handle, but this process also allows for an additional purification. Residual organic compounds are typically removed during the melting step and compounds with a higher melting point, e.g. metal oxides, can often be mechanically separated.

In other words, preferred is a process according to the invention, further comprising the step:
g) melting the recovered noble metal obtained in step f) to obtain an ingot comprising noble metal,
wherein the amount of non-noble metal impurities in the ingot is less than 20 %, preferably less than 10 %, more preferably less than 5 %, by weight of the ingot.

In view of this additional process step, also disclosed herein is a noble metal ingot produced by the process of the present invention.

The skilled person understands that in view of the above disclosure the invention also relates to the corresponding use of organic amine compounds and/or non-noble metal salts for recovering noble metals from a colloidal composition comprising nanoparticles of noble metals, preferably in a process according to the invention, wherein the organic amine compound is an aromatic N- or O-heterocyclic compound with two or more amine groups, wherein the aromatic ring is substituted with one amine group on each of the two carbon atoms directly adjacent to the heteroatom in the heterocyclic aromatic ring, and wherein the non-noble metal is selected from the list consisting of group 3 to 12 metals of period 4, aluminium and tin, wherein preferred embodiments of the use result from the preferred processes disclosed above.

Finally, the inventors realized that in some cases it is the step of converting noble metal containing industrial waste, i.e. potentially hazardous, into colloidal compositions that is particular challenging, either for technical reasons or due to legal obligations. Therefore, special facilities or special service providers may be required for producing the colloidal composition. However, for these specialized companies it might not be efficient to also conduct the process of the present invention that is overall very safe and easy to operate, as their specific know-how and/or expensive equipment is not needed, failing to justify increased costs for the task. At the same time, customers might lack the technical background to select the suitable treating substance for recovering noble metals from the colloidal composition or for adjusting other process parameters.

To solve this problem, the invention relates to a kit of parts that can be provided by the producer of the colloidal composition and that enables the customer to conduct the process of the present invention.

Correspondingly, the invention relates to a Kit of parts for use in a process for recovering noble metals from a colloidal composition comprising nanoparticles of noble metals, preferably for a process according to the invention, comprising:
I) One or more containers comprising one or more solvents, one or more stabilizers and nanoparticles of one or more noble metals; and
II) One or more containers comprising one or more treating substance selected from the group consisting of organic amine compounds and non-noble metal salts,
   as well as optionally
III) Instructions comprising information about suitable process parameters,
wherein the organic amine compound is an aromatic N- or O-heterocyclic compound with two or more amine groups, wherein the aromatic ring is substituted with one amine group on each of the two carbon atoms directly adjacent to the heteroatom in the heterocyclic aromatic ring, and wherein the non-noble metal is selected from the list consisting of group 3 to 12 metals of period 4, aluminium and tin, wherein preferred embodiments of the kit result from the preferred processes disclosed above.

Hereinafter, the invention is described in more detail using experiments.

### Experimental Set A -organic amine compounds:

### Example A1:

In a 13 mL test tube 10.00 mL (equals 10,48 g) of a colloidal composition comprising 1536 ppm by weight of Pd⁰ nanoparticles, water as a solvent and mercaptopropane sulfonic acid as a stabilizer was provided. 98.98 mg of melamine was added as a treating substance, resulting in a solid residue. The tube was vigorously swirled horizontally on a mixing table to obtain the largest contact surface between the fluid and the melamine. After one hour 50 µL of 37 % HCI-solution was added to adjust the pH and the tube was swirled for another 10 minutes. Precipitation occurred and the solid precipitate was separated by filtering of the fluid over a Whatman no. 2 filter paper. The filtrate was analyzed and contained 68 ppm palladium. Correspondingly, the Pd recovery in the solid precipitate was 95.5 %, wherein the palladium is obtained by incinerating the organic compounds by glowing the solid precipitate at approximately 1000 °C.

It is apparent that a high recovery-efficiency of the noble metal can be obtained with the process of the invention.

### Example A2:

112.85 g of a colloidal composition comprising 1536 ppm by weight of Pd⁰ nanoparticles, water as a solvent and mercaptopropane sulfonic acid as a stabilizer were provided. 2.50 g of melamine was added under vigorous stirring with a magnetic stirrer.

The mixture was agitated under stirring for 14 hours. The residue was filtered off under vacuum, dried at 105 °C and glowed at approximately 1000 °C. The glowed product was a metallic bead with a weight of 133.8 mg and 81.2 % by weight Pd with sulfur as the main impurity at about 16.2 %.

The filtrate still contained 373 ppm Pd indicating that the step of adjusting the pH value of the composition is important for achieving a high recovery-efficiency even after very long agitation times t1 of 14 h.

Therefore, 1 mL 37 % HCI-solution was added to the filtrate to adjust the pH value. Immediately a precipitation occurred. The solid precipitate was filtered off and the filtrate was again measured on Pd content.

The Pd content of the filtrate was only 8 ppm proving that high recovery efficiencies are obtained with the process of the present invention resulting in an excellent overall Pd recovery of 99.4 %.

### Example A3:

In a 250 mL glass beaker with a magnetic stirring bean 100 mL of a colloidal composition comprising 0,157 % by weight of Pd⁰ nanoparticles, water as a solvent and mercaptopropane sulfonic acid as a stabilizer was provided. 1 g of Melamine was added as a treating substance in powdery form at 500 rpm stirring speed for 15 min, wherein the pH stabilized to 5.09. Subsequently, 0.95 g of 37 % HCI-solution was added to adjust the pH. The pH after addition was 1.55. The composition was left overnight under continuous stirring. The pH stabilized at 2.06. The decantate (i.e. unfiltered) obtained by decantation was measured for its palladium content and found to contain only 2.5 ppm corresponding to an overall Pd recovery of about 99.8 %.

### Example A4:

The suitability of the process of the present invention was studied in two scale up experiments, batch 1 and batch 2.

In experiment batch 1 a total of 1170.73 g of a water based colloidal composition was provided containing 1560 ppm palladium(0)-nanoparticles, mercaptopropane sulfonic acid (MPS) as a stabilizer as well as dimethyl sulfoxide (DMSO) and dichloro methane (DCM) at a starting pH of 2.96.

To this colloidal composition 17.63 g of melamine (99 % purity) were added as a treating substance and the resulting composition was kept under stirring for 120 min at 23 °C, wherein the pH stabilized at 5.94. Subsequently, 15 mL of 30 % HCI was added, wherein the pH stabilized at 1.5 after 15 min. The obtained wet precipitate (44.34 g) was separated from the liquid filtrate (1139.86 g) and dried at 105 °C for 2 hours until weight stabilization to give 19.78 g of a dry precipitate. The noble metal was obtained in elemental form after 60 min of incineration at 900 °C in a quick asher, wherein the obtained product (1.96415 g) comprised 84.9 % by weight of palladium. The filtrate only comprised 3.9 ppm of palladium. The overall recovery yield was 99.75 %. However, the effective recovery of Pd was 90.1 % as little Pd droplets were formed at the bottom of the crucible that were not weighted as they were too small to collect properly.

In experiment batch 2 a total of 472 kg of a colloidal composition was provided that comprised 397 kg of a water based colloidal composition containing 1560 ppm palladium(0)-nanoparticles, mercaptopropane sulfonic acid (MPS) as a stabilizer as well as dimethyl sulfoxide (DMSO) and dichloro methane (DCM). Compared to batch 1, the colloidal composition in batch 2 also comprised an organic layer comprising <10ppm with a weight of 75 kg resulting in a starting pH of the aqueous phase of 5.34. The experiments for batch 2 were split into two separate runs that were conducted separately for each half of the starting material under the same conditions in two 2 reactors of 225 L each, wherein half of the treating substance and acid is added respectively. The material on the inside reactor is polypropylene and polyester on the outside.

To the colloidal composition 6.2 kg of melamine (99 % purity) were added as a treating substance and the resulting composition was kept under vigorous stirring at 20 °C for 3 hours, wherein the pH stabilized at 6.15. Subsequently, 10 kg of 30 % HCI was added, wherein the pH stabilized at 1.48 after 1 h. The overall time between melamine addition and separation of the solid precipitate was 80 min.

The obtained wet precipitate was separated from the liquid filtrate and dried at 105 °C for 72 hours to give the dry precipitate. The noble metal was obtained in elemental form after 3 h incineration at 1000 °C in a gas oven, wherein the obtained product (0.8343 kg) comprised 87.7 % by weight of palladium. The filtrate only comprised 23 ppm of palladium corresponding to a recovery of 98.5 %. The overall recovery of Pd was 731,68 g of the 736,32 g theoretical Pd content in the colloidal composition corresponding to a recovery-efficiency of about 99.3 %. The small difference between the two methods of determining the Pd-recovery is acceptable and in fact expected in view of the large scale of the experiment, that e.g. causes concentration gradients in the filtrate) and the inherent limitations of the measurement methods used for analysis of the product and the filtrate. The inventors found that the remains of palladium in the filtrate settle over time.

The filtrated obtained in experiment batch 2 was kept at 4 °C for 30 days. After filtration of the orange coloured settlement the fluid only contained only 14 ppm Pd.

### Example A5:

While the organic amine compounds defined in the process of the present invention were found suitable as treating substances, the inventors analyzed other organic compounds in order to show that these can in fact not reproduce the surprising effect found for the organic amine compounds of the process of the present invention.

For this, 10 mL of a colloidal composition comprising 0.119 % Pd, Water and MPS was contacted with different reagents and shaken on a laboratory shaker for 1 h. Subsequently, the composition was filtered over a Whatman No.4 filter and the filtrate was analyzed for its Pd content. The obtained results are summarized in the following table.

| EXP | Added Reagent | quantity | Pd ‰ in filtrate |
|---|---|---|---|
| A5.1 (reference.) | - | - | 1,17 |
| A5.2 | Ethylene diamine | 100 µL | 1,12 |
| A5.3 | triethyl amine | 100 µL | 1,12 |
| A5.4 | melamine | 100 mg | 0,02 |
| A5.5 | cyanuric acid | 100 mg | 1,13 |
| A5.6 | disodium dymethyl glyoxim octahydrat | 100 mg | 1,11 |
| A5.7 | caffeine | 100 mg | 1,14 |
| A5.8 | 1,3,5-triazine | 100 mg | 1,11 |
| A5.9 | hydrochinon | 100 mg | 1,14 |

Experiment 5.1 serves as a reference and was obtained without addition of any reagent. Experiment 5.4 again highlights the highly beneficial effect and the high Pd-recovery efficiency of the process according to the invention, when organic amine compounds as defined in the process of the present invention are used as treating substance. Experiments 5.2 and 5.3 clearly show that non-aromatic diamines and trialkyl amines do not yield the desired effect. Likewise, experiments 5.5 and 5.9 emphasizes that aromatic organic compounds having two or more amine groups in the specific position are needed and that it is not possible to use aromatic organic compounds having two or more hydroxyl groups instead. Caffein was also found to be no suitable treating substance. While the results for experiments 5.6 and 5.8 are still unsatisfactory overall, they show a slight increase in the performance.

### Experimental Set B - Non-noble metal salt:

### Example B1:

To prove the suitability of non-noble metal salts as defined in the process of the present invention as treating substance, the recovery efficiency of the process of the present invention was determined by analyzing the noble metal content in the filtrate as discussed above.

In Example B1, 4 runs were conducted. In each run, 200 L (equals 213 kg) of a water based colloidal composition was provided containing 0.1 % by weight of palladium(0)-nanoparticles (equals 1054 ppm) and mercaptopropane sulfonic acid (MPS) as a stabilizer at a starting pH of 3.31. In each run, 13 L of Fe(III)Cl₃ (concentration 40% m/m) solution was added as a treating substance. After 15 min of stirring, 19.8 kg of Ca(OH)₂ was added to the composition for adjusting the pH to 12. In runs 2 and 3 additionally 72 g of an organic compound comprising a flocculant was added (i.e. a linear cationic polymer based on an oily emulsion in water available under the trade name Zetag 9018). About 10 to 15 minutes after addition of the inorganic base, the obtained precipitate comprising noble metal in elemental form was obtained by filtration and drying.

The obtained filtrates were analysed for the Pd content, wherein several samples were taken for each run during filtration of the approximately 1000 L. The measurements yielded Pd contents in the range of 1.1 to 11 ppm, wherein most of the measurements gave results in the range of 2 to 7 ppm. This corresponds to a recovery efficiency in the range of 99.0 to 99.9 % with a dominant range of 99.3 to 99.8 %.

A representative filter cake was incinerated in an oven with low oxygen level (<7%) at a temperature of 600 °C. The elemental composition of the obtained powder comprising elemental noble metal was analysed.

The quantitative analysis revealed that the powder contained 4.2 % by weight palladium and 8.92 % by weight of iron. Qualitative XRF analysis revealed that apart from carbon and oxygen (e.g. from carbonates) the powder comprises significant amounts of iron, calcium, sulphur and chloride. When adding diluted hydrochloric acid to the powder, gas bubbles evolve, typically for carbonate reacting to CO₂. A suspension of 1 g powder in 10 mL of water is highly alkaline (pH >11).

The noble metal can be obtained from the obtained powder by treatment with a suitable acid, for dissolving the impurities. For example, three different acids were tested for the recovery of Pd from the above powder and gave excellent recovery efficiency of Pd from the powder as listed in the table below.

| HNO₃ 40% | HNO₃ 65% | HCl 37% | Pd recovery (%) |
|---|---|---|---|
| 25 mL | | | 97,6 |
| | | 25mL | 83,3 |
| 2,5 mL | 22,5mL | | 100 |

### Example B2:

In a 250 mL glass beaker with a magnetic stirring bean 100 mL of a colloidal composition comprising 1580 ppm by weight of Pd⁰ nanoparticles, water as a solvent and mercaptopropane sulfonic acid as a stabilizer was provided. A specific amount of Fe(III)Cl₃ was added as a treating substance using an aqueous solution (about 40 % by weight) as detailed in the table below. The stirring speed was 500 rpm.

After about 5 minutes of agitating the composition, a specific amount of Ca(OH)₂ was added as given in the table below. After 10 minutes of mixing the fluid was filtrated over a Whatman no 4 (6 micron) filter paper by gravity filtration. The filtrate was measured on palladium content by ICP analysis.

| EXP. | Ferric chloride / g | Calcium hydroxide /g | Pd in filtrate / ppm | pH of filtrate |
|---|---|---|---|---|
| B2.1 | 3,24 | 2,52 | 2,5 | 11 |
| B2.2 | 1,87 | 1,98 | 1,8 | 11 |
| B2.3 | 2,13 | 2,00 | 0,8 | 11 |
| B2.4 | 1,49 | 1,50 | 15,2 | 11 |

These results correspond to Pd recovery efficiencies of 99.8, 99.9, 99.9 and 99.0 %, respectively, clearly evidencing the high suitability of the non-noble metal salt as treating substance.

Comparison experiments conducted by the inventors revealed, that other metal, e.g. Na₂S, were not suitable treating substances.

## Claims

1. Process for recovering noble metals from a colloidal composition, comprising the steps:
a) providing or producing a colloidal composition comprising one or more solvents, one or more stabilizers and nanoparticles of one or more noble metals,
b) contacting the colloidal composition with one or more treating substance selected from the group consisting of organic amine compounds and non-noble metal salts, to produce an intermediate composition,
c) agitating the intermediate composition for a time t1 to produce a treated composition,
d) adjusting the pH of the treated composition to promote the precipitation of a solid precipitate comprising noble metal in elemental form,
e) separating at least a portion of the solid precipitate from the liquid phase, and
f) recovering noble metal in elemental form from the solid precipitate,
wherein the organic amine compound is an aromatic N- or O-heterocyclic compound with two or more amine groups, wherein the aromatic ring is substituted with one amine group on each of the two carbon atoms directly adjacent to the heteroatom in the heterocyclic aromatic ring, and wherein the non-noble metal is selected from the list consisting of group 3 to 12 metals of period 4, aluminium and tin.

2. Process according to claim 1, wherein the colloidal composition comprises less than 10 ppm, preferably less than 5 ppm by weight, of ions of the one or more noble metals with respect to the weight of the colloidal composition.

3. Process according to claims 1 or 2, wherein the one or more solvents are selected from the list consisting of protic and aprotic polar solvents, preferably selected from the list consisting of water, ethyl acetate, methyl acetate, tetrahydrofuran, acetone, dimethylformamide, acetonitrile, dimethyl sulfoxide, dichloromethane, methanol, ethanol, propanol, butanol and saturated organic acids with 1 to 6 carbon atoms, more preferably selected from the list consisting of water, dimethyl sulfoxide and dichloromethane, wherein the colloidal composition most preferably comprises water.

4. Process according to any one of claims 1 to 3, wherein the one or more stabilizers are anionic surfactants, preferably selected from the group consisting of substituted or unsubstituted organo sulfates, organo sulfonates, organo phosphates and organo carboxylates, preferably substituted organo sulfonates or organo sulfates, most preferably mercapto propane sulfonate.

5. Process according to any one of claims 1 to 4, wherein the one or more noble metals are selected from the group consisting of rhodium, platinum, gold, palladium, iridium, osmium, ruthenium and silver, preferably selected from the group consisting of platinum, gold, palladium and silver, most preferably are palladium and/or gold.

6. Process according to any one of claims 1 to 5, wherein the organic amine compound is selected from the list consisting of 2,4,6-Triamino-s-triazine, 1,3,5-Triazine-2,6-diamine, 4-Alkyl-1,3,5-triazine-2,6-diyldiamine, 2,6-Pyridindiamine, 2,6-Pyrimidindiamine, 2,6-Pyrazindiamine, 2,5-Furandiamine, 2,5-Pyrroldiamine, 2,5-Imidazoldiamine, 1,3-Oxazol-2,5-diamine preferably selected from the list consisting of 2,4,6-Triamino-s-triazine, 2,6-Diamino-s-triazine and 4-Alkyl-1,3,5-triazine-2,6-diyldiamine, more preferably 2,4,6-Triamino-s-triazine.

7. Process according to any one of claims 1 to 6, wherein the non-noble metal salts are selected form the list consisting of metal halides, metal nitrates and metal sulfates, preferably selected form the list consisting of metal bromides and/or metal chlorides, more preferably selected form the list consisting of metal chlorides,
and/or
wherein the non-noble metal salt is selected from the list consisting of iron salts, cobalt salts, nickel salts, chromium salts, tin salts, titanium salts and aluminium salts, preferably selected from the group consisting of tin salts, titanium salts, iron salts and aluminium salts, more preferably selected from the group consisting of iron salts and aluminium salts.

8. Process according to any one of claims 1 to 7, wherein the time t1 is in the range of 10 to 240 min, preferably in the range of 20 to 120 min, more preferably in the range of 30 to 60 min, most preferably at least 30 min.

9. Process according to any one of claims 1 to 8, wherein the pH of the treated composition in step d) is adjusted to a pH in the range of 0 to 4, preferably in the range of 0.5 to 2, if an organic amine compound was used as a treating substance in step b), wherein the pH of the treated composition is preferably adjusted by addition of an inorganic acid, preferably hydrochloric acid or hydrobromic acid, more preferably hydrochloric acid,
or
wherein the pH of the treated composition in step d) is adjusted to a pH in the range of 7 to 14, preferably in the range of 7.2 to 12, if a non-noble metal salt was used as a treating substance in step b), wherein the pH of the treated composition is preferably adjusted by addition of an inorganic base, preferably a metal hydroxide, preferably selected from the group consisting of sodium hydroxide, potassium hydroxide, lithium hydroxide, magnesium hydroxide and calcium hydroxide, most preferably calcium hydroxide.

10. Process according to any one of claims 1 to 9, wherein the separation in step e) is conducted by filtration, centrifugation or decantation, preferably by filtration, wherein most preferably the separation comprises a step of cooling the treated composition before separation to temperatures below 8 °C, preferably below 4 °C, for at least 24 hours, preferably at least 48 hours and/or a step of cooling the separated liquid phase to temperatures below 8 °C, preferably below 4 °C, for at least 24 hours, preferably at least 48 hours.

11. Process according to any one of claims 1 to 10, wherein the recovery in step f) comprises heating the separated solid precipitate at a temperature of more than 400 °C, preferably of more than 500 °C, more preferably of more than 600 °C for a time t2 to evaporate and/or incinerate residual organic compounds in the solid precipitate, if an organic amine compound was used as a treating substance in step b), wherein t2 preferably is in the range of 1 to 4 hours, more preferably in the range of 2 to 3 hours,
or
wherein the recovery in step f) comprises dissolving a least a portion of the non-noble metals in the separated solid precipitate in an inorganic acid, preferably hydrochloric acid and/or hydrobromic acid and/or nitric acid, more preferably hydrochloric acid and/or nitric acid, if a non-noble metal salt was used as a treating substance in step b).

12. Process according to any one of claims 1 to 11, wherein the solid precipitate separated in step e) comprises at least 90 %, preferably at least 95 %, more preferably at least 98 %, by weight of the noble metal contained in the colloidal composition produced or provided in step a).

13. Process according to any one of claims 1 to 12, further comprising the step:
g) melting the recovered noble metal obtained in step f) to obtain an ingot comprising noble metal,
wherein the amount of non-noble metal impurities in the ingot is less than 20 %, preferably less than 10 %, more preferably less than 5 %, by weight of the ingot.

14. Use of organic amine compounds and/or non-noble metal salts for recovering noble metals from a colloidal composition comprising nanoparticles of noble metals, wherein the organic amine compound is an aromatic N- or O-heterocyclic compound with two or more amine groups, wherein the aromatic ring is substituted with one amine group on each of the two carbon atoms directly adjacent to the heteroatom in the heterocyclic aromatic ring, and wherein the non-noble metal is selected from the list consisting of group 3 to 12 metals of period 4, aluminium and tin.

15. Kit of parts for use in a process for recovering noble metals from a colloidal composition comprising nanoparticles of noble metals, preferably for a process according to any one of claims 1 to 13, comprising:
I) One or more containers comprising one or more solvents, one or more stabilizers and nanoparticles of one or more noble metals; and
II) One or more containers comprising one or more treating substance selected from the group consisting of organic amine compounds and non-noble metal salts,
wherein the organic amine compound is an aromatic N- or O-heterocyclic compound with two or more amine groups, wherein the aromatic ring is substituted with one amine group on each of the two carbon atoms directly adjacent to the heteroatom in the heterocyclic aromatic ring, and wherein the non-noble metal is selected from the list consisting of group 3 to 12 metals of period 4, aluminium and tin.
